# NEUE EUROPÄISCHE PATENTSCHRIFT

(11) **EP 1 895 330 B2**
(45) Veröffentlichungstag und Bekanntmachung des Hinweises auf die Entscheidung über den Einspruch: **01.08.2012**
(45) Hinweis auf die Patenterteilung: 25.03.2009
(21) Anmeldenummer: 07016323.3
(22) Anmeldetag: 21.08.2007
(51) Int. Cl.: G01V 8/14

(54) **Ziel für eine optoelektronische Schutzeinrichtung**
Target for an opto-electronic protection device
Cible pour un dispositif de sécurité optoélectronique

(30) Priorität: 31.08.2006 DE 202006013375 U
(43) Veröffentlichungstag der Anmeldung: 05.03.2008
(73) Patentinhaber: SICK AG, 79183 Waldkirch (DE)
(72) Erfinder: Mack, Stefan, Dr., 79104 Freiburg (DE); Bergbach, Roland, 79341 Kenzingen (DE)
(74) Vertreter: Ludewigt, Christoph

(56) Entgegenhaltungen:
- DE-A1- 2 550 653
- DE-A1- 4 240 804
- DE-A1- 10 026 710
- DE-A1- 10 026 710
- DE-A1- 10 109 750
- DE-A1- 10 216 579
- DE-A1- 10 312 708
- DE-A1- 19 938 639
- DE-A1-102004 011 780
- 'Der Brockhaus-Naturwissenschaft und Technik', Bd. 1, teil A-GD 2003, HEIDELBERG

## Beschreibung

Die Erfindung betrifft eine optoelektronische Schutzeinrichtung.

Bekannt sind optoelektronische Schutzeinrichtungen mit zumindest einer Kamera zur Aufnahme von Bildern eines Schutzbereichs, wobei der Schutzbereich von sogenannten Zielen begrenzt wird. Bekannt ist es, die Ziele als Reflektoren, insbesondere als Retroreflektoren, auszubilden. Mit der Kamera werden die Reflektoren überwacht. Befindet sich eine Person oder ein Gegenstand zwischen der Kamera und dem Reflektor, wird das erwartete Bild des Reflektors gestört, was mit Hilfe einer Auswerteeinheit überprüft wird, und ein entsprechendes Alarmsignal wird ausgegeben. Problematisch ist allerdings, wenn ein reflektierender Gegenstand in den Schutzbereich eintritt. Im ungünstigsten Fall simuliert der Gegenstand einen Teil des den Schutzbereich begrenzenden Reflektors und wird nicht bemerkt. Daher werden bekannterweise sogenannte kooperative Ziele zur Begrenzung von Schutzbereichen verwendet, welche durch Segmente gebildet werden, die unterschiedliche Reflektionseigenschaften aufweisen. Beispielsweise können diese Segmente durch helle und dunkle Bereiche gebildet werden. Wesentlich ist, dass die Kamera ein Muster in den Zielen erkennt, welches auf Veränderung hin überwacht wird. Der DE 100 26 710 A1 ist beispielsweise eine optoelektronische Schutzeinrichtung zu entnehmen, deren Schutzbereich durch einen Reflektor begrenzt wird, welcher durch Segmente codiert ist, die Strahlung zumindest eines definierten Wellenlängenbereiches reflektieren bzw. nicht reflektieren. Die Kamera überprüft nun, ob das Ziel durch Gegenstände oder Personen abgeschattet und das vorgegebene Muster des Ziels durch zwischen der Kamera und dem Ziel befindliche Gegenstände oder Personen gestört wird. Ein Muster ist durch einen Gegenstand oder eine Person kaum zu simulieren. Insbesondere bei Bewegung der Person oder des Gegenstands wird das erwartete Muster gestört, so dass die Person oder der Gegenstand detektiert und ein entsprechendes Alarmsignal ausgegeben werden kann.

Sollen größere Schutzbereiche überwacht werden, ist es kaum zu vermeiden, dass die Kamera teilweise unter sehr flachen Winkels auf die Reflektoren gerichtet ist. Retroreflektoren weisen jedoch den Nachteil auf, dass sie zwar bei nahezu senkrechtem Einfall das Licht in Einfallsrichtung zurückreflektieren, dieser Effekt jedoch bei Einfall von Licht unter flachen Winkeln weniger stark ausgeprägt ist oder gar vollständig einbricht. Retroreflektoren funktionieren zuverlässig im Wesentlichen dann, wenn das Licht mit einer Abweichung von nur +/- 3° von der Lotrechten auf die Oberfläche des Retroreflektors einfällt. Bei größeren Abweichungen variiert die Helligkeit des reflektierten Lichts, so dass keine zuverlässige Detektion möglich ist oder Kameras mit sehr hoher Detektionsdynamik benötigt werden, welche teuer sind. Um größere Schutzbereiche zu überwachen, werden dann mehrere Kameras benötigt, damit die den Schutzbereich abgrenzenden Ziele im Wesentlichen in der Draufsicht überwacht werden können, was zu hohen Kosten führt.

Aus der DE 10313708 A1 ist ein als Schichtverbund aufgebauter Retroreflektor bekannt, der eine retroreflektierende Schicht aufweist, wobei die Retroreflexion an dreidimensionalen Strukturelementen (Tripeln) erfolgt. Die retroreflektierende Schicht ist mit einer transparenten Schutzschicht bedeckt. Auf den Strukturelementen sind Mikrostrukturen vorgesehen zur Modifizierung des rückgestrahlten Lichtes.

Die Aufgabe der Erfindung besteht daher darin, eine optoelektronische Schutzeinrichtung mit einem Ziel bereitzustellen, welches eine geringe Helligkeitsdynamik aufweist, bei jeder Ausrichtung der Kamera relativ zu dem Ziel zuverlässig detektiert werden kann und welches weiterhin kostengünstig ist. Weiterhin soll eine optoelektronische Schutzeinrichtung vorgeschlagen werden, welche auch große Schutzbereiche zuverlässig und ohne großen Aufwand überwachen kann.

Die Aufgabe der Erfindung wird gelöst durch eine optoelektronische Schutzeinrichtung mit einem Ziel mit den Merkmalen des Anspruches 1. Vorteilhafte Ausgestaltungen und Weiterbildungen der Erfindung sind in den Unteransprüchen angegeben.

Das Ziel für die erfindungsgemäße optoelektronische Schutzeinrichtung mit einem Reflektor, welcher als Retroreflektor ausgebildet ist und welcher Segmente aufweist, wobei die Reflektionseigenschaften wenigstens zweier Segmente unterschiedlich sind, weist auf dem Reflektor eine Strukturen aufweisende Folie auf, wobei die Strukturen als Mikroprismen ausgebildet sind. An den Strukturen wird von außen auf die Folie fallendes Licht zum Reflektor bzw. zum Lot hin gebrochen..Auch unter flachen Winkeln auf die Oberfläche der Folie fallendes Licht wird damit derart gebrochen, dass es unter größerem Einfallswinkel, insbesondere nahezu senkrecht, auf die Oberfläche des Retroreflektors auftrifft. Der Retroreflektor reflektiert das Licht in diesem Fall zuverlässig in die Einfallrichtung des Lichts zurück, wobei das Licht in der Folie wieder derart gebrochen wird, dass es unter dem gleichen flachen Winkel austritt, wie es auf die Folie eingefallen ist. Ist somit die Kamera auch unter flachen Winkeln zum Ziel ausgerichtet, wobei in der Regel eine Lichtquelle zur Beleuchtung der Ziels, d.h. des Retroreflektors, im oder am Gehäuse der Kamera angeordnet ist, fällt das ausgesandte Licht in die Kamera zurück, so dass der Reflektor zuverlässig detektiert werden kann.

Die als Mikroprismen ausgebildeten Strukturen sorgen für eine Ablenkung des einfallenden Lichts in Richtung auf die Oberfläche des Reflektors.

Die erfindungsgemäße optoelektronische Schutzeinrichtung weist eine Kamera zur Aufnahme von Bildern eines Schutzbereichs und eine Auswerteeinheit zur Auswertung der aufgenommenen Bilder auf. Dabei ist der Schutzbereich durch zumindest ein Ziel abgegrenzt, wobei das Ziel als kooperatives Ziel gemäß der Erfindung ausgebildet ist. Da die erfindungsgemäßen Ziele einfallendes Licht entweder in beliebiger Richtung oder auch bei flachen Einfallwinkeln in die Einfallrichtung zurückreflektieren, kann mit der erfindungsgemäßen optoelektronischen Schutzeinrichtung auch ein großer Schutzbereich einfach und kostengünstig mit einer oder wenigen Kameras überwacht werden, da die Kameras selbst bei flachen Winkeln relativ zu den Zielen die Ziele zuverlässig detektieren können und somit den Schutzbereich erfassen können.

Vorzugsweise basiert die Auswertung auf einem Vergleich der aufgenommenen Bilder mit einem hinterlegten Referenzbild, so dass das Eindringen von Gegenständen oder Personen in den Bereich zwischen Ziel und Kamera auch bei stark reflektierenden Oberflächen der Gegenstände oder der Person erfasst werden können.

Vorteilhafterweise kann die Schutzeinrichtung eine dem Ziel zugeordnete Strahlungsquelle aufweisen, um das Ziel optimal **a**usleuchten zu können, damit die Kamera das Ziel einfach und eindeutig erfassen kann.

Die Erfindung wird anhand der nachfolgenden Figuren ausführlich erläutert. Es zeigt
- Figur 1: eine schematische Darstellung eines ersten Ausführungsbeispiels eines Ziels für eine erfindungsgemäße Vorrichtung,
- Figur 2: eine schematische Darstellung eines Ziels gemäß dem Stand der Technik,

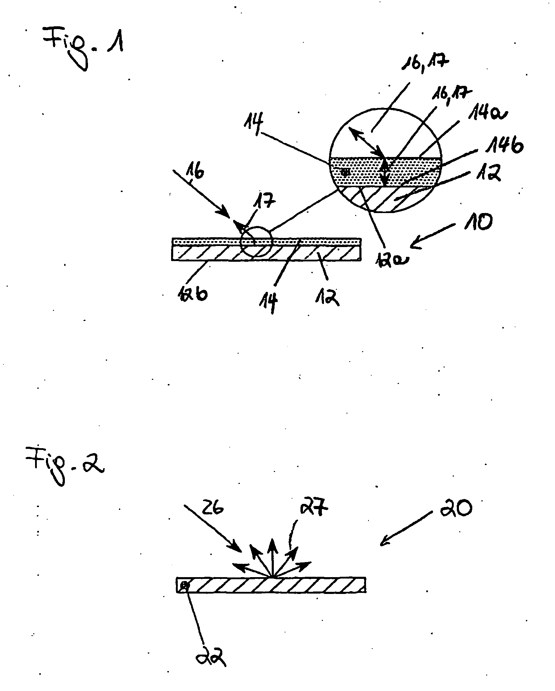

Die Figur 2 zeigt ein Ziel 20 gemäß dem Stand der Technik, welches einen Reflektor 22 aufweist, der als Retroreflektor ausgebildet ist. Fällt auf die Oberfläche des Reflektors 22 ein einfallender Lichtstrahl 26, reflektiert der Reflektor 22 den Lichtstrahl 26 bei Einfallswinkeln, die nur wenig von der Lotrechten abweichen, in den einfallenden Lichtstrahl 26 zurück. Fällt der Lichtstrahl 26 jedoch wie in Figur 2 gezeigt unter flachen Winkeln, d. h. teilweise schon unter Winkeln von weniger als 60° oder 70°, auf die Oberfläche des Reflektors 22 ein, werden Lichtstrahlen 27 in unterschiedliche Richtungen reflektiert. Die Funktion des Reflektors 22 als Retroreflektor ist nicht gewährleistet. Damit können Kameras einer optoelektronischen Schutzeinrichturig, welche in flachen Winkeln zu dem Reflektor 22, der beispielsweise in bandförmiger Form einen Schutzbereich abgrenzt, das von einer in der Nähe der Kamera angeordneten Lichtquelle auf den Reflektor 22 ausgesandte Licht nicht detektieren, da es nicht in die Kamera zurückreflektiert wird.

In Figur 1 ist daher ein erstes Ausführungsbeispiel eines Ziels 10 in einer schematischen Darstellung gezeigt, welches einen Reflektor 12 mit einer Oberfläche 12a und einer Unterseite 12b und mit einer auf dem Reflektor 12 angeordneten Folie 14 mit einer Oberfläche 14a und einer Unterseite 14b aufweist. Die Folie 14 liegt somit mit ihrer Unterseite 14b auf der Oberfläche 12a des Reflektors 12 auf. Vorzugsweise wird die Folie 14 auf den Reflektor 12 auflaminiert. Die Folie 14 weist nicht dargestellte Strukturen auf, die derart ausgebildet sind, dass ein auf die Oberfläche 14a der Folie 14 auftreffender einfallender Lichtstrahl 16 in der Folie 14 zum Reflektor 12 bzw. zum Lot hingebrochen wird, wie es in der Ausschnittsvergrößerung von Figur 1 dargestellt ist. Die Strukturen der Folie 14 sind als Mikroprismen ausgebildet. Durch die Brechung des einfallenden Lichtstrahls 16 zum Lot hin bzw. zum Reflektor 12 hin wird erreicht, dass der Lichtstrahl 16, der unter einem flachen Winkel auf die Oberfläche 14a der Folie 14 auftrifft, unter einem größeren Winkel, vorzugsweise etwa senkrecht, auf die Oberfläche 12a des Reflektors 12 auftrifft. Damit wird gewährleistet, dass das Licht in einem Winkel auf den Reflektor 12. welcher als Retroreflektor ausgebildet ist, einfällt, in welchem die Funktionsweise des Retroreflektors nicht eingeschränkt ist. Nach Reflektion an der Oberfläche 12a des Reflektors 12 wird somit der Lichtweg des einfallenden Lichtstrahls 16 umgekehrt. Der reflektierte Lichtstrahl 17 stimmt somit mit dem einfallenden Lichtstrahl 16 überein, so dass das Licht unabhängig vom Winkel, unter dem der Reflektor 12 angeleuchtet wird oder unter dem die Kamera auf das Ziel 10 gerichtet ist, in die Richtung reflektiert wird, aus der es auf den Reflektor 12 einfällt. Somit kann das Ziel 10 auch bei Anordnung einer Kamera und der entsprechenden Lichtquelle unter flachen Winkeln relativ zur Oberfläche 14a des Ziels 10 zuverlässig detektiert werden. Zudem ist es mit einer derartigen strukturierten Folie 14 auch möglich, die Abstrahlcharakteristik der Folie 14 und somit des Reflektors 12 räumlich zu modulieren. Zur Überwachung eines Schutzbereichs, welcher mit dem Ziel 10 abgegrenzt ist, ist in der Nähe der überwachenden Kamera, vorzugsweise im Gehäuse der Kamera, eine Lichtquelle angeordnet, welche das Ziel 10 anstrahlt. Die für ein kooperatives Ziel 10 nötigen Segmente können durch unterschiedliche Reflektionseigenschaften verschiedener Bereiche des Reflektors 12, beispielsweise durch Bereiche in unterschiedlichen Farben oder Helligkeiten, erreicht werden.

## Patentansprüche

1. Optoelektronische Schutzeinrichtung mit einer Kamera zur Aufnahme von Bildern eines Schutzbereichs und einer Auswerteeinheit zur Auswertung der aufgenommenen Bilder, wobei der Schutzbereich durch zumindest ein Ziel (10, 30, 40) abgegrenzt ist, wobei das Ziel (10, 30, 40) als kooperatives Ziel (10, 30, 40) ausgebildet ist, wobei das Ziel (10, 30, 40) für eine optoelektronische Schutzeinrichtung ausgebildet ist mit einem Reflektor (12), welcher als Retroreflektor ausgebildet ist und welcher Segmente aufweist, wobei die Reflektionseigenschaften wenigstens zweier Segmente unterschiedlich sind, **dadurch gekennzeichnet, dass** auf dem Reflektor (12) zusätzlich eine Strukturen aufweisende Folie (14) angeordnet ist, wobei die Strukturen als Mikroprismen ausgebildet sind und an den Strukturen von außen auf die Folie (14) einfallendes Licht (16) zum Reflektor (12) hin gebrochen wird und nach Reflektion wieder an den Strukturen so gebrochen wird, dass der reflektierte Lichtstrahl mit dem einfallenden Lichtstrahl zusammenfällt.

2. Optoelektronische Schutzeinrichtung nach Anspruch 1, **dadurch gekennzeichnet, dass** die Auswertung auf einem Vergleich der aufgenommenen Bilder mit einem hinterlegten Referenzbild basiert.

3. Optoelektronische Schutzeinrichtung nach einem der Ansprüche 1 oder 2, **dadurch gekennzeichnet, dass** die Schutzeinrichtung eine dem Ziel (10, 30, 40) zugeordnete Strahlungsquelle aufweist.

4. Optoelektronische Schutzeinrichtung nach Anspruch 1, **dadurch gekennzeichnet, dass** die Bereiche (34, 44) in einem Muster angeordnet sind.

## Claims

1. An optoelectronic protective device having a camera for the taking of images of a protected zone and having an evaluation unit for the evaluation of the taken images, wherein the protected zone is bounded by at least one target (1 0, 30, 40), wherein the target (1 0, 30, 40) is made as a cooperative target (10, 30, 40), wherein the target (1 0, 30, 40) is made for an optoelectronic protective device having a reflector (12) which is made as a retroreflector and which has segments, wherein the reflection properties of at least two segments are different, **characterised in that** a film (14) having structures is additionally arranged on the reflector (12), with the structures being made as microprisms, and with light (16) incident onto the film (14) from the outside being refracted towards the reflector (12) at the structures and being refracted again at the structures after reflection such that the reflected light beam coincides with the incident light beam.

2. An optoelectronic protective device in accordance with claim 1, **characterised in that** the evaluation is based on a comparison of the taken images with a stored reference image.

3. An optoelectronic protective device in accordance with one of the claims 1 or 2, **characterised in that** the protective device has a radiation source associated with the target (10, 30, 40).

4. An optoelectronic protective device in accordance with claim 1, **characterised in that** the zones (34, 44) are arranged in a pattern.

## Revendications

1. Dispositif de protection optoélectronique comprenant un appareil de prise de vues pour la prise de vues d'une zone de protection et une unité d'analyse pour l'analyse des images enregistrées, la zone de protection étant délimitée par au moins un objectif (10, 30, 40), l'objectif (10, 30, 40) étant conçu comme un objectif (10, 30, 40) coopératif, l'objectif (10, 30, 40) étant conçu pour un dispositif de protection optoélectronique avec un réflecteur (12) qui est conçu comme rétroréflecteur et qui présente des segments, les propriétés de réflexion d'au moins deux segments étant différentes, **caractérisé en ce qu'**en outre un film (14) présentant des structures est disposé sur le réflecteur (12), les structures étant conçues sous forme de microprismes et de la lumière (16) arrivant sur les structures par l'extérieur sur le film (14) étant brisée en direction du réflecteur (12) et étant brisée à nouveau après réflexion sur les structures de telle sorte que le faisceau de lumière réfléchi coïncide avec le faisceau de lumière incident.

2. Dispositif de protection optoélectronique selon la revendication 1, **caractérisé en ce que** l'analyse est basée sur une comparaison des images enregistrées avec une image de référence déposée.

3. Dispositif de protection optoélectronique selon l'une quelconque des revendications 1 ou 2, **caractérisé en ce que** le dispositif de protection présente une source de rayonnement attribuée à l'objectif (10, 30, 40).

4. Dispositif de protection optoélectronique selon la revendication 1, **caractérisé en ce que** les zones (34, 44) sont disposées dans une trame.
